# FASCICULE DE BREVET EUROPEEN

(11) **EP 0 707 372 B1**
(45) Date de publication et mention de la délivrance du brevet: **08.07.1998**
(21) Numéro de dépôt: 95402260.4
(22) Date de dépôt: 09.10.1995
(51) Int. Cl.: H02K 11/04

(54) **Génératrice d'énergie électrique munie de dispositifs d'adaptation de la fréquence**
Elektrischer Generator mit Frequenzanpassungsvorrichtung
Electric generator with frequency adapting means

(30) Priorité: 14.10.1994 FR 9412294
(43) Date de publication de la demande: 17.04.1996
(73) Titulaire: EUROPEAN GAS TURBINES SA, F-75116 Paris (FR); GEC ALSTHOM ELECTROMECANIQUE SA, 75116 Paris (FR)
(72) Inventeur: Blanchet, Alain, F-38000 Grenoble (FR); Damiron, René, F-90300 Cravanche (FR)
(74) Mandataire: Fournier, Michel

(56) Documents cités:
- EP-A- 0 329 368
- WO-A-92/14298
- AT-B- 382 271
- DE-A- 3 528 347
- DE-B- 1 065 921
- FR-A- 1 357 374
- FR-A- 2 438 936
- DATABASE WPI Section EI, Week 8941 Derwent Publications Ltd., London, GB; Class X11, AN 89-299407 & SU-A-1 471 258 ( AINVARG A S), 7 avril 1989

## Description

L'invention concerne une machine tournante, génératrice d'énergie électrique.

L'invention concerne plus particulièrement une machine tournante, génératrice d'énergie électrique, alimentant un réseau électrique, entraînée directement par une turbine à gaz et/ou une turbine à vapeur, et débitant dans le réseau par l'intermédiaire de dispositifs d'adaptation de la fréquence générée par la machine à la fréquence du réseau. En service, ces dispositifs chauffent de façon importante. Il est donc nécessaire d'avoir des moyens de refroidissement associés. De tels dispositifs d'adaptation sont disposés dans des armoires dédiées, externes à ladite machine, et comprenant des moyens de refroidissement. Il en résulte des encombrements importants pour l'ensemble machine tournante/armoires de dispositif d'adaptation de fréquence.

FR-A-2438936 concerne une génératrice d'énergie électrique, comprenant un rotor et un stator agencés autour d'un axe de rotation du rotor. La machine débite dans un réseau au moins à travers un dispositif d'adaptation de la fréquence générée par la machine à la fréquence du réseau. le dispositif est rapporté en extrémité du stator à l'interieur du carter de la génératrice. Un ventilateur est disposé dans le carter, et est spécifiquement dédié au refroidissement du dispositif d'adaptation. En outre le dispositif d'adaptation vient se rapporté en extrémité du stator necessitant un carter ayant une longueur supplémentaire augmentant la longueur initiale du générateur. Les deux dernières caractéristique de la génératrice selon FR-A-2438936 induisent une augmentation de l'encombrement de la génératrice.

L'un des buts de la présente invention est de réduire sensiblement l'encombrement de l'ensemble machine tournante/dispositif d'adaptation de fréquence.

Un autre but de la présente invention est d'utiliser au moins une partie des moyens de refroidissement de ladite machine tournante pour refroidir la partie du dispositif d'adaptation comprise dans le stator de la machine tournante.

Ces buts sont atteints selon l'invention en disposant à l'intérieur de la machine une partie au moins des éléments du dispositif de conversion sans modification des dimensions du cater de la génératrice, et en les faisant bénéficier des circuits de refroidissement de la machine.

Les dispositifs statiques d'adaptation de fréquences comprennent en général des ponts de diodes/thyristors. Un tel dispositif est composé de façon connue d'un pont redresseur par phase, dit pont machine, d'une inductance éventuelle et d'un pont onduleur, dit pont réseau.

L'invention a pour objet une génératrice d'énergie électrique, polyphasée, comprenant un rotor et un stator agencés autour d'un axe de rotation du rotor, refroidis par au moins, une circulation de fluide de refroidissement, ladite génératrice débitant dans un réseau au moins à travers un dispositif d'adaptation de la fréquence générée par la génératrice à la fréquence du réseau, le stator contenant au moins une partie des composants du dispositif d'adaptation de fréquence, caractérisée en ce que la partie des composants du dispositif d'adaptation contenue dans le stator est disposée dans le flux de circulation du fluide de refroidissement de la génératrice.

Dans une forme de réalisation, ladite partie des composants du dispositif d'adaptation comprend une pluralité de ponts machine redresseurs ayant un pôle plus, un pôle moins, et un point milieu, chaque phase étant connectée au point milieu de l'un des ponts machine redresseur.

Dans un premier mode de réalisation, la machine est du type à enroulement statorique polygonal, comprenant au moins un enroulement statorique polygonal à N sommets, chaque sommet définissant une phase, tous les pôles plus et tous les pôles moins des ponts machine redresseurs étant connectés respectivement à un anneau commun plus et à un anneau commun moins, centrés sur l'axe du rotor, entourant les têtes de bobines de l'enroulement statorique de type polygonal.

Avantageusement, les ponts redresseurs sont localisés autour des têtes de bobines de l'enroulement statorique de type polygonal.

Chaque pont redresseur est en regard de, et connecté à une tête de bobine constituant l'un des sommets de l'enroulement statorique polygonal.

La machine, selon l'invention, comprend deux bornes respectivement plus et moins, issues respectivement de l'anneau plus et de l'anneau moins, destinées à être connectées à un pont réseau onduleur, éventuellement à travers une inductance.

Le pont réseau onduleur, ainsi que l'éventuelle inductance sont aussi localisés pour bénéficier de la circulation de fluide de refroidissement.

Les ponts redresseurs sont montés sur des radiateurs à ailettes, lesdits radiateurs à ailettes étant montés sur des cales support isolantes autour des têtes de bobine.

Selon un deuxième mode de réalisation, la machine est du type à enroulement triphasé statorique, comprenant 2N enroulements triphasés statoriques, chaque phase de chaque enroulement étant connectée au point milieu d'un pont machine redresseur, les pôles moins et les pôles plus des ponts machine redresseur d'un même enroulement étant respectivement connectés ensemble et couplés à une borne moins et à une borne plus.

Avantageusement, les trois ponts redresseurs de chaque enroulement constituent un bloc, couplé à un pont réseau onduleur à travers une inductance de boucle.

Les blocs de ponts machine redresseurs sont localisés dans des espaces du caisson machine en remplacement des composants qui ont été supprimés du fait de l'utilisation d'un groupe de production d'énergie dans lequel la turbine entraîne directement la machine tournante génératrice, sans réducteur interposé.

Les ponts redresseurs bénéficient de ladite circulation de fluide.

Avantageusement, les ponts redresseurs sont montés sur des radiateurs à ailettes.

Un premier avantage de la présente invention est la diminution sensible de l'encombrement de l'ensemble machine tournante/armoires de dispositif d'adaptation de fréquence. En effet, une partie au moins du dispositif étant intégré dans le stator de la machine, les dimensionnements des armoires et des moyens de refroidissement sont sensiblement diminués.

Un autre avantage de l'invention est une diminution sensible du prix de l'ensemble machine tournante/armoires de dispositif d'adaptation de fréquence.

D'autres avantages de la présente invention résulteront de la description qui va suivre en référence aux dessins annexés dans lesquels :
- la figure 1 est une représentation schématique unifilaire d'un groupe de production d'énergie comprenant une machine selon l'invention.
- la figure 2 est une représentation schématique d'un groupe de production d'énergie comprenant une machine selon un premier mode de réalisation de l'invention.
- la figure 3 représente une vue schématique partielle en coupe transversale du premier mode de réalisation selon l'invention.
- la figure 4 représente une vue schématique partielle selon la ligne IV-IV de la représentation de la figure 3.
- la figure 5 représente une vue schématique partielle d'un deuxième mode de réalisation selon l'invention.

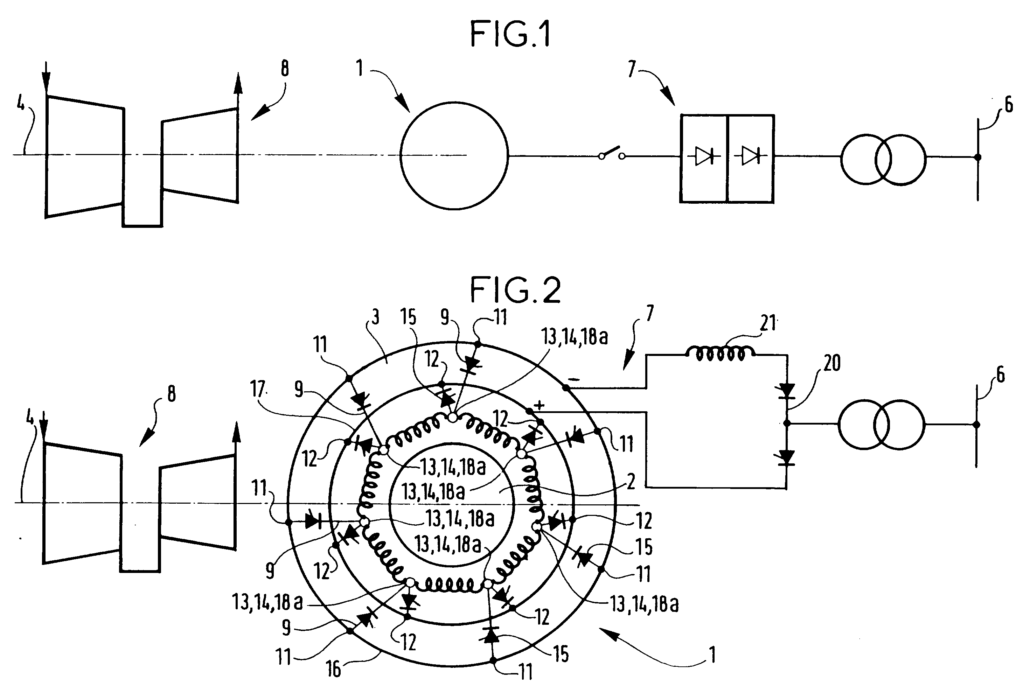

La machine tournante 1, représentée schématiquement dans la Fig. 1, est une génératrice d'énergie électrique polyphasée et comprend une partie rotor 2 et une partie stator 3 d'axe 4. La machine comprend, de façon connue, au moins une circulation 5 de gaz de refroidissement destinée à refroidir les parties stator 3 et rotor 2. Toujours de façon connue, la machine débite dans un réseau 6, à travers un dispositif 7 d'adaptation de la fréquence générée par la machine 1 à la fréquence du réseau 6.

La partie rotor 2 de la machine 1 est avantageusement entraînée directement et sans réducteur par une turbine 8 à gaz ou à vapeur.

Selon une caractéristique essentielle de l'invention, la partie stator 3 comprend au moins une partie 9 des composants du dispositif 7 d'adaptation de fréquence.

Avantageusement, la partie 9 des composants du dispositif 7 d'adaptation de fréquence est localisée dans la circulation 5 de fluide de refroidissement de la machine tournante 1, qui dans l'exemple décrit est de l'air. En outre la partie 9 des composants du dispositif 7 d'adaptation de fréquence peut comprendre des moyens 10, tels qu'un radiateur à ailettes pour favoriser l'échange thermique avec la circulation 5 d'air.

Selon l'invention, la partie 9 des composants du dispositif 7 d'adaptation de fréquence s'intègre dans la partie stator 3 de la machine 1 sans augmentation du volume de la dite machine 1.

Dans la forme de réalisation décrite, le dispositif 7 d'adaptation de fréquence, comprend, de façon connue, une pluralité de ponts machine redresseurs 9 ayant un pôle plus 12, un pôle moins 11, et un point milieu 13, chaque phase 14 étant connectée au point milieu 13 de l'un des ponts machine redresseur 9. Ces pont machine redresseurs 9 comprennent, par exemple, deux éléments redresseurs 15 en série. Ces éléments peuvent être commandables, semi-commandables ou non commandables.

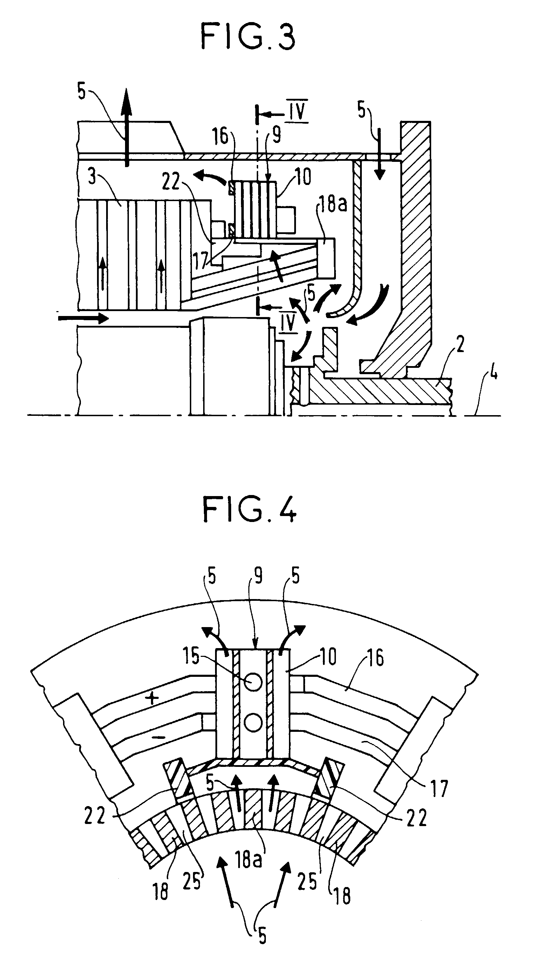

Dans un premier mode de réalisation représenté dans les figures 2 et 3, la machine tournante 1 est du type à enroulement statorique polygonal, comprenant au moins un enroulement statorique polygonal à N sommets. De façon connue, l'enroulement comprend des têtes de bobine 18, localisées aux extrémités longitudinales de la partie stator 3. Chaque sommet 13 de l'enroulement statorique polygonal définit une phase 14 correspondant à une tête principale de bobine 18a. Tous les pôles plus 12 et tous les pôles moins 11 des ponts machine redresseurs 9 sont connectés respectivement à un anneau commun plus 17 et à un anneau commun moins 16, centrés sur l'axe 4 de la machine 1, entourant les têtes de bobine 18 de l'enroulement statorique de type polygonal.

Les ponts redresseurs 9 sont localisés sur un cercle centré sur l'axe 4 de la machine, entourant les têtes de bobine 18 de l'enroulement statorique de type polygonal.

Avantageusement, chaque pont machine redresseur 9 est en regard de, et connecté à une tête principale de bobine 18a constituant l'un des sommets de l'enroulement statorique polygonal.

Avantageusement, les ponts machine redresseurs 9 sont montés sur des radiateurs à ailettes 10, lesdits radiateurs à ailettes 10 étant montés sur des cales support isolantes 22 autour des têtes de bobine 18. De ce fait, la circulation 5 d'air passant dans les espaces 25 inter-têtes refroidit les ponts machine redresseurs 9 et leur radiateur 10 associé.

La machine comprend, en outre, deux bornes externes respectivement plus et moins, issues respectivement de l'anneau plus 17 et de l'anneau moins 16, destinées à être connectées à un pont réseau onduleur 20 à travers une inductance de boucle éventuelle 21.

Dans des variantes (non représentées) de ce premier mode de réalisation, le pont réseau onduleur 20 est aussi disposé autour des têtes de bobine ou dans le circuit de refroidissement de la machine.

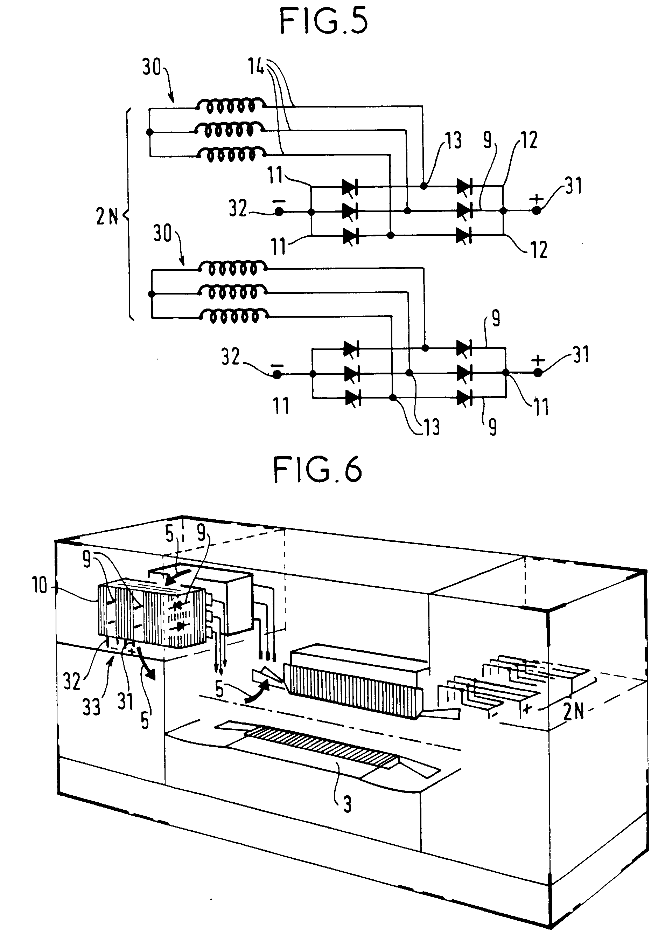

Dans un deuxième mode de réalisation représenté dans les figures 5 et 6, la machine est du type à enroulement triphasé statorique, comprenant 2N enroulements triphasés statoriques 30.

Chaque phase 14 de chaque enroulement 30 est connectée au point milieu 13 d'un pont machine redresseur 9, les pôles moins 11 et les pôles plus 12 des ponts machine redresseurs 9 d'un même enroulement 30 étant connectés ensemble respectivement à une borne commune moins 32 et à une borne commune plus 31.

Ainsi, pour chaque enroulement 30 il existe un bloc 33 de trois ponts machine redresseurs 9. Ce bloc est avantageusement monté sur un radiateur à ailette 10 afin d'améliorer le transfert de chaleur. Les blocs 33 de ponts redresseurs, de type Graetz, peuvent être soit raccordés chacun à un pont onduleur associé, ce qui donne 2N ponts onduleurs à coupler ensuite entre eux, soit couplés entre eux, en parallèle ou série-parallèle, pour débiter ensuite dans un seul pont onduleur. Comme dans le premier mode de réalisation, le pont réseau onduleur peut être interne ou externe à la machine.

Les blocs 33 de ponts machine redresseurs 9 sont localisés dans des espaces du caisson machine en remplacement des composants qui ont été supprimés du fait de l'utilisation d'un groupe de production d'énergie dans lequel la turbine entraîne directement la machine tournante génératrice, sans réducteur interposé.

Ces blocs de ponts machine redresseurs sont situés dans le circuit de refroidissement de la machine.

## Revendications

1. Génératrice d'énergie électrique, polyphasée, comprenant un rotor (2) et un stator (3) agencés autour d'un axe de rotation (4) du rotor (2), refroidis par au moins une circulation (5) de fluide de refroidissement, ladite génératrice débitant dans un réseau (6) au moins à travers un dispositif (7) d'adaptation de la fréquence générée par la génératrice (1) à la fréquence du réseau (6), le stator (3) contenant au moins une partie (9) des composants du dispositif (7) d'adaptation de fréquence, caractérisée en ce que la partie (9) des composants du dispositif (7) d'adaptation contenue dans le stator (3) est disposée dans le flux de circulation (5) du fluide de refroidissement de la génératrice.

2. Génératrice selon la revendication 1 caractérisée en ce que ladite partie (9) des composants du dispositif (7) d'adaptation comprend une pluralité de ponts machine redresseurs (9) ayant un pôle plus (12), un pôle moins (11), et un point milieu (13), chaque phase (14) étant connectée au point milieu (13) de l'un des ponts machine redresseur (9).

3. Génératrice selon la revendication 2 caractérisée en ce qu'elle est du type à enroulement statorique polygonal, comprenant au moins un enroulement statorique polygonal à N sommets, chaque sommet définissant une phase (14), tous les pôles plus (12) et tous les pôles moins (11) des ponts machine redresseurs (9) étant connectés respectivement à un anneau commun plus (17) et à un anneau commun moins (16), centrés sur l'axe (4) du rotor (2), entourant les têtes de bobines (18, 18a) de l'enroulement statorique de type polygonal.

4. Génératrice selon la revendication 3 caractérisée en ce que les ponts redresseurs (9) sont localisés autour des têtes de bobines (18, 18a) de l'enroulement statorique de type polygonal.

5. Génératrice selon la revendication 4, caractérisée en ce que chaque pont redresseur (9) est en regard de, et connecté à une tête de bobine (18a) constituant l'un des sommets de l'enroulement statorique polygonal.

6. Génératrice selon l'une quelconque des revendications 3 à 5 caractérisée en ce qu'elle comprend deux bornes respectivement plus et moins, issues respectivement de l'anneau plus (17) et de l'anneau moins (16), destinées à être connectées à un pont réseau onduleur (20), éventuellement à travers une inductance de boucle (21).

7. Génératrice selon l'une quelconque des revendications 3 à 6 caractérisée en ce que le pont réseau onduleur (20) et l'inductance de boucle (21) sont aussi localisés pour bénéficier de la circulation de fluide de refroidissement.

8. Génératrice selon l'une quelconque des revendications 3 à 7 caractérisée en ce que les ponts redresseurs (9) sont montés sur des radiateurs (10) à ailettes, lesdits radiateurs (10) à ailettes étant montés sur des cales support isolantes (22), autour des têtes de bobine (18, 18a).

9. Génératrice selon l'une quelconque des revendications 1 à 2 caractérisée en ce qu'elle est du type à enroulement triphasé statorique, comprenant 2N enroulements (30) triphasés statoriques, chaque phase (14) de chaque enroulement (30) étant connectée au point milieu (13) d'un pont machine redresseur (9), les pôles moins (11) et les pôles plus (12) des ponts machine redresseur (9) d'un même enroulement (30) étant respectivement connectés ensemble et couplés à une borne moins (32) et à une borne plus (31).

10. Génératrice selon la revendication 9 caractérisée en ce que les trois ponts redresseurs (9) de chaque enroulement (30) constituent un bloc (33), couplé à un pont réseau onduleur à travers une inductance de boucle.

11. Génératrice selon l'une des revendications 9 et 10, caractérisée en ce que les blocs (33) de ponts machine redresseurs (9) sont localisés dans des espaces du caisson machine en remplacement des composants qui ont été supprimés du fait de l'utilisation d'un groupe de production d'énergie dans lequel la turbine entraîne directement la machine tournante (1) génératrice, sans réducteur interposé.

12. Génératrice selon l'une quelconque des revendications 9 à 11 caractérisée en ce que les ponts redresseurs (9) bénéficient de ladite circulation de fluide (5).

13. Génératrice selon la revendication 12, caractérisée en ce que les ponts redresseurs (9) sont montés sur des radiateurs (10) à ailettes.

## Patentansprüche

1. Mehrphasiger elektrischer Generator, der einen Rotor (2) und einen Stator (3) umfaßt, die um eine Drehachse (4) des Rotors (2) herum angeordnet sind, die von wenigstens einem Kühlfluid-Kreislauf (5) gekühlt werden, wobei der Generator wenigstens über eine Vorrichtung (7) zur Anpassung der vom Generator (1) erzeugten Frequenz an die Frequenz eines Netzes (6) in das Netz (6) liefert, wobei der Stator (3) wenigstens einen Teil (9) der Bestanteile der Frequenzanpassungsvorrichtung (7) enthält, dadurch gekennzeichnet, daß der im Stator (3) enthaltene Teil (9) der Bestandteile der Anspassungsvorrichtung (7) im Strom des Kreislaufs (5) des Kühlfluids des Generators angeordnet ist.

2. Generator nach Anspruch 1, dadurch gekennzeichnet, daß der Teil (9) der Bestandteile der Anpassungsvorrichtung (7) eine Vielzahl von Gleichrichter-Maschinenbrücken (9) umfaßt, die einen Pluspol (12), einen Minuspol (11) und einen Mittelpunkt (13) aufweisen, wobei jede Phase (14) mit dem Mittelpunkt (13) einer der Gleichrichter-Maschinenbrücken (9) verbunden ist.

3. Generator nach Anspruch 2, dadurch gekennzeichnet, daß er vom Typ mit polygonaler Statorwicklung ist, der wenigstens eine polygonale Statorwicklung mit N Spitzen umfaßt, wobei jede Spitze eine Phase (14) definiert, wobei alle Pluspole (12) und alle Minuspole (11) der Gleichrichter-Maschinenbrücken (9) mit einem gemeinsamen Plusring (17) bzw. einem gemeinsamen Minusring (16), die auf die Achse (4) des Rotors (2) zentriert sind, verbunden sind, die die Spulenköpfe (18, 18a) der Statorwicklung vom Polygontyp umgeben.

4. Generator nach Anspruch 3, dadurch gekennzeichnet, daß die Gleichrichterbrücken (9) um die Spulenköpfe (18, 18a) der Statorwicklung vom Polygontyp herum angeordnet sind.

5. Generator nach Anspruch 4, dadurch gekennzeichnet, daß jede Gleichrichterbrücke (9) einem Spulenkopf (18a), der eine der Spitzen der polygonalen Statorwicklung bildet, gegenübersteht und mit ihm verbunden ist.

6. Generator nach einem der Ansprüche 3 bis 5, dadurch gekennzeichnet, daß er zwei Anschlußklemmen, plus bzw. minus, umfaßt, die von dem Plusring (17) und Minusring (16) herkommen, die dazu bestimmt sind, mit einer Wechselrichter-Netzbrücke (20), eventuell über eine Schleifeninduktanz (21), verbunden zu werden.

7. Generator nach einem der Ansprüche 3 bis 6, dadurch gekennzeichnet, daß die Wechselrichter-Netzbrücke (20) und die Schleifeninduktanz (21) auch so angeordnet sind, daß sie aus dem Kühlfluid-Kreislauf Nutzen ziehen.

8. Generator nach einem der Ansprüche 3 bis 7, dadurch gekennzeichnet, daß die Gleichrichterbrücken (9) an Lamellenkühlern (10) angebracht sind, wobei die Lamellenkühler (10) an isolierenden Trägerklötzen (22) um die Spulenköpfe (18, 18a) herum angebracht sind.

9. Generator nach einem der Ansprüche 1 bis 2, dadurch gekennzeichnet, daß er vom Typ mit dreiphasiger Statorwicklung ist, der 2N dreiphasige Statorwicklungen (30) umfaßt, wobei jede Phase (14) jeder Wicklung (30) mit dem Mittelpunkt (13) einer Gleichrichter-Maschinenbrücke (9) verbunden ist, wobei die Minuspole (11) und die Pluspole (12) der Gleichrichter-Maschinenbrücken (9) derselben Wicklung (30) jeweils miteinander verbunden und an eine Minusanschlußklemme (32) und eine Plusanschlußklemme (31) angeschlossen sind.

10. Generator nach Anspruch 9, dadurch gekennzeichnet, daß die drei Gleichrichterbrücken (9) jeder Wicklung (30) einen Block (33) bilden, der über eine Schleifeninduktanz an eine Wechselrichter-Netzbrücke angeschlossen ist.

11. Generator nach einem der Ansprüche 9 und 10, dadurch gekennzeichnet, daß die Blöcke (33) aus Gleichrichter-Maschinenbrücken (9) in den Räumen des Maschinengehäuses unter Ersetzung der Bestandteile angeordnet sind, die aufgrund der Verwendung einer Energieerzeugungsgruppe weggelassen wurden, bei der die Turbine die drehende Generatormaschine (1) ohne zwischengeschaltetes Untersetzungsgetriebe direkt antreibt.

12. Generator nach einem der Ansprüche 9 bis 11, dadurch gekennzeichnet, daß die Gleichrichterbrücken (9) aus dem Fluidkreislauf (5) Nutzen ziehen.

13. Generator nach Anspruch 12, dadurch gekennzeichnet, daß die Gleichrichterbrücken (9) an Lamellenkühlern (10) angebracht sind.

## Claims

1. A poly-phase electricity generator comprising a rotor (2) and a stator (3) that are organized around an axis of rotation (4) about which the rotor (2) rotates, and that are cooled by at least one stream (5) of cooling fluid, said generator serving a grid (6) at least via a frequency-matching device (7) for matching the frequency generated by the generator (1) to the frequency of the grid (6), the stator (3) containing at least some components (9) of the frequency-matching device (7), said generator being characterized in that those components (9) of the frequency-matching device (7) which are contained in the stator (3) are disposed in the stream (5) of cooling fluid that is used to cool the generator.

2. A generator according to claim 1, characterized in that said included components (9) of the frequency-matching device (7) contained in the stator (3) comprise a plurality of rectifier machine bridges (9), each of which has a plus pole (12), a minus pole (11), and a mid-point (13), each phase (14) being connected to the mid-point (13) of one of the rectifier machine bridges (9).

3. A generator according to claim 2, characterized in that it is of the polygonal stator winding type, including at least one polygonal stator winding having N vertices, each vertex defining a phase (14), all of the plus poles (12) and all of minus poles (11) of the rectifier machine bridges (9) being connected respectively to a common plus ring (17) and to a common minus ring (16), the common rings being centered on the axis (4) of the rotor (2) and surrounding the coil heads (18, 18a) of the polygonal-type stator winding.

4. A generator according to claim 3, characterized in that the rectifier bridges (9) are located around the coil heads (18, 18a) of the polygonal-type stator winding.

5. A generator according to claim 4, characterized in that each rectifier bridge (9) faces and is connected to a coil head (18a) constituting one of the vertices of the polygonal stator winding.

6. A generator according to any one of claims 3 to 5, characterized in that it includes two terminals, namely a plus terminal and a minus terminal respectively from the plus ring (17) and from the minus ring (16), which terminals are connected to an inverter grid bridge (20), optionally via a loop inductor (21).

7. A generator according to any one of claims 3 to 6, characterized in that the inverter grid bridge (20) and the loop inductor (21) are also located such that they can make use of the stream of cooling fluid.

8. A generator according to any one of claims 3 to 7, characterized in that the rectifier bridges (9) are mounted on finned radiators (10), said finned radiators (10) being mounted on insulating support blocks (22), around the coil heads (18, 18a).

9. A generator according to any one of claims 1 to 2, characterized in that it is of the three-phase stator winding type, including 2N three-phase stator windings (30), each phase (14) of each winding (30) being connected to the mid-point (13) of a rectifier machine bridge (9), the minus poles (11) and the plus poles (12) of the rectifier machine bridges (9) of the same winding (30) being respectively connected together and coupled to a minus terminal (32) and to a plus terminal (31).

10. A generator according to claim 9 characterized in that the three rectifier bridges (9) of each winding (30) constitute a unit (33) coupled to an inverter grid bridge via a loop inductor.

11. A generator according to claim 9 or 10, characterized in that the units (33) comprising the rectifier machine bridges (9) are located in spaces in the machine casing instead of the components that are omitted because an electricity generating set is used in which the turbine drives the rotary generating machine (1) directly, without any gearing being interposed.

12. A generator according to any one of claims 9 to 11, characterized in that the rectifier bridges (9) make use of said stream of fluid (5).

13. A generator according to claim 12, characterized in that the rectifier bridges (9) are mounted on finned radiators (10).
